# FASCICULE DE BREVET EUROPEEN

(11) **EP 0 669 696 B1**
(45) Date de publication et mention de la délivrance du brevet: **30.07.1997**
(21) Numéro de dépôt: 95102071.8
(22) Date de dépôt: 15.02.1995
(51) Int. Cl.: H02K 5/14, H02K 19/36

(54) **Ensemble modulaire d'alimentation et de commande pour un alternateur de véhicule automobile**
Modulare Speise- und Steuereinheit für einen Wechselstromgenerator eines Fahrzeugs
Modular supply and control assembly for an alternator of a vehicle

(30) Priorité: 28.02.1994 FR 9402242
(43) Date de publication de la demande: 30.08.1995
(73) Titulaire: VALEO EQUIPEMENTS ELECTRIQUES MOTEUR, 94000 Créteil (FR)
(72) Inventeur: Bornet, Michel, F-62630 Etaples (FR); Mouillard, Dominique, F-62600 Berck/Mer (FR)
(74) Mandataire: Gamonal, Didier

(56) Documents cités:
- EP-A- 0 484 287
- FR-A- 2 514 962
- US-A- 5 248 910

## Description

La présente invention concerne un ensemble d'alimentation et de commande pour un alternateur de véhicule automobile.

L'invention concerne plus particulièrement un ensemble du type par exemple décrit et représenté dans le document EP-A-0.484.287 comportant une plaque-support en matériau isolant destinée à être fixée à une partie fixe de l'alternateur, et un porte-balais, dans lequel la plaque-support porte, sur une première face, un circuit intégré de régulation de la tension fournie par l'alternateur dont des broches de raccordement électrique s'étendent à travers le matériau de la plaque-support pour déboucher dans un logement formé dans la seconde face de la plaque-support, et du type comportant un circuit de raccordement électrique qui comprend des pattes de raccordement en contact avec les broches de raccordement du circuit intégré et qui est relié à au moins deux bornes de branchement entourées par un boîtier en matériau isolant pour constituer une prise de branchement de l'ensemble.

Selon cette conception connue, la prise de branchement est réalisée venue de matière par moulage avec le corps en matériau isolant de la plaque-support, les bornes de branchement appartenant au circuit de raccordement.

Quelle que soit la position de la prise de branchement, sur l'autre ou l'autre des deux faces principales de la plaque-support, cette conception a pour inconvénient de nécessiter la réalisation d'un ensemble spécifique pour chaque application, c'est-à-dire pour chaque type d'alternateur et/ou pour chaque type de véhicule automobile équipé d'un tel ensemble.

En effet, selon les modèles et les utilisations, il peut être souhaitable de disposer d'un agencement et/ou d'une conformation différente de la prise de branchement afin de simplifier sa connexion ultérieure avec une fiche appartenant au faisceau électrique du véhicule.

La conception connue dans laquelle la prise de branchement est réalisée venue de matière avec l'ensemble ne permet pas d'aboutir à une telle modularité des composants et nécessite de disposer d'un moule différent pour chacun des modèles possédant une conformation différente du boîtier de la prise de branchement.

Afin de remédier à ces inconvénients, l'invention propose un ensemble d'alimentation et de commande du type mentionné précédemment, caractérisé en ce qu'il comporte un couvercle en matériau isolant en forme générale de plaque destiné à recouvrir la seconde face de la plaque-support et qui porte la prise de branchement dont le boîtier isolant est réalisé venu de matière par moulage avec le couvercle et dont les bornes de branchement appartiennent à un circuit de branchement qui est relié au circuit de raccordement de la plaque-support.

Selon d'autres caractéristiques de l'invention :
- le couvercle comporte un circuit de branchement réalisé sous la forme d'un flan métallique découpé de branchement, partiellement noyé dans le matériau isolant du couvercle, dont au moins deux pattes non-recouvertes de matériau isolant font saillie hors du plan général du flan métallique de branchement au-delà d'une face supérieure du couvercle pour constituer les bornes de branchement ;
- des pattes du flan métallique de branchement, non recouvertes de matériau isolant, font saillie hors du plan général du flan métallique de branchement, au-delà de la face inférieure du couvercle, agencée en regard de la seconde face de la plaque-support, pour constituer des pattes de liaison électrique, qui sont en contact électrique avec des zones de contact du circuit de raccordement de la plaque-support ;
- les pattes de liaison électrique comportent des extrémités repliées à angle droit qui s'étendent dans un plan parallèle au plan général du couvercle ;
- les extrémités repliées à angle droit des pattes de liaison électrique s'étendent dans des fenêtres du couvercle qui débouchent dans la face supérieure du couvercle ;
- le circuit de raccordement de la plaque-support est réalisé sous la forme d'un flan métallique découpé de raccordement, partiellement noyé dans le matériau isolant de la plaque-support, dont des pattes non recouvertes de matériau isolant font saillie hors du plan général du flan métallique de raccordement et à l'intérieur du logement pour être en contact électrique avec les broches de raccordement du circuit intégré ;
- le flan métallique de raccordement comporte des zones planes non recouvertes de matériau isolant qui constituent les zones de contact du circuit de raccordement pour sa liaison électrique avec le circuit de branchement ;
- les pattes de raccordement s'étendent sensiblement à angle droit par rapport au plan général du flan métallique de raccordement et chacune le long d'une broche de raccordement correspondante à laquelle elle peut être soudée ;
- le flan métallique de raccordement comporte une ouverture centrale qui s'étend autour du logement formé dans la seconde face de la plaque-support, et les pattes de raccordement s'étendent vers l'intérieur à partir du bord périphérique de cette ouverture en direction des broches de raccordement du circuit intégré;
- la face inférieure du couvercle comporte une série de cloisons en matériau isolant, réalisées venues de matière par moulage, qui s'étendent en saillie à l'intérieur du logement formé dans la seconde face de la plaque-support, entre les broches de raccordement du circuit intégré ;
- la plaque-support comporte un réceptacle, réalisé venu de matière par moulage, destiné à recevoir un condensateur ;
- le condensateur comporte deux pattes de raccordement destinées à venir en contact avec deux zones, non recouvertes de matériau isolant, du flan métallique de raccordement qui sont agencées le long du bord ouvert du réceptacle qui est situé sensiblement dans le plan du flan métallique de raccordement ;
- le corps en matériau isolant du porte-balais est réalisé en une seule pièce moulée avec la plaque-support ;
- la plaque-support et le couvercle en forme de plaque s'étendent dans un plan général sensiblement perpendiculaire à l'axe de rotation du ressort de l'alternateur.

D'autres caractéristiques et avantages de l'invention apparaîtront à la lecture de la description détaillée qui va suivre pour la compréhension de laquelle on se reportera aux dessins annexés dans lesquels :

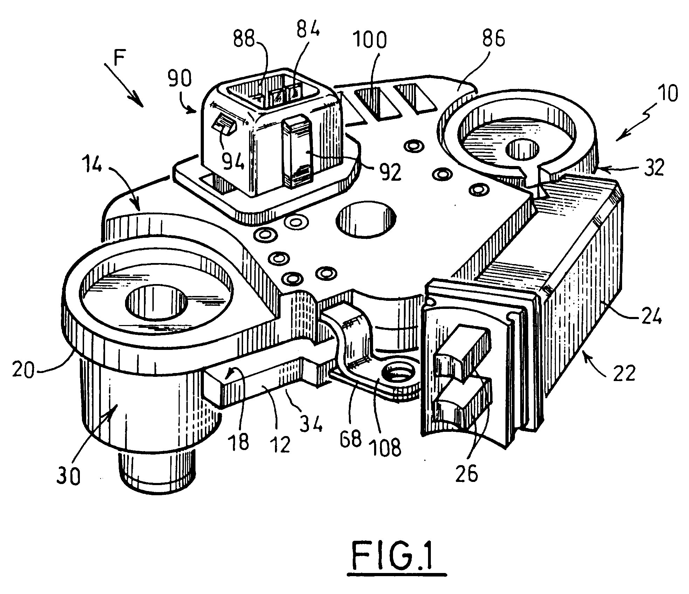

- La figure 1 est une vue générale en perspective d'un exemple de réalisation d'un ensemble d'alimentation et de commande pour un alternateur de véhicule automobile, réalisé conformément aux enseignements de l'invention ;
- la figure 2 est une vue de dessus de la plaque-support de l'ensemble illustré sur la figure 1;
- la figure 3 est une vue en section transversale selon la ligne 3-3 de la figure 2 ;
- la figure 4 est une vue, à plus grande échelle, de la face inférieure du couvercle de l'ensemble illustré sur la figure 1;
- la figure 5 est une vue latérale en élévation, à plus petite échelle, de l'ensemble illustré sur la figure 1, selon la flèche F de cette figure ;
- la figure 6 est une vue de dessous, similaire à celle de la figure 4, du flan métallique de branchement appartenant au couvercle de l'ensemble illustré à la figure 4 ;
- la figure 7 est une vue de détail en perspective du flan métallique de branchement illustré sur la figure 6 ; et
- la figure 8 est une vue de dessus, à plus grande échelle, du flan métallique de raccordement appartenant à la plaque-support illustrée aux figures 2 et 3.

Conformément à l'invention l'ensemble 10 illustré sur les figures est constitué pour l'essentiel par une plaque-support inférieure 12 et par un couvercle supérieur en forme de plaque 14.

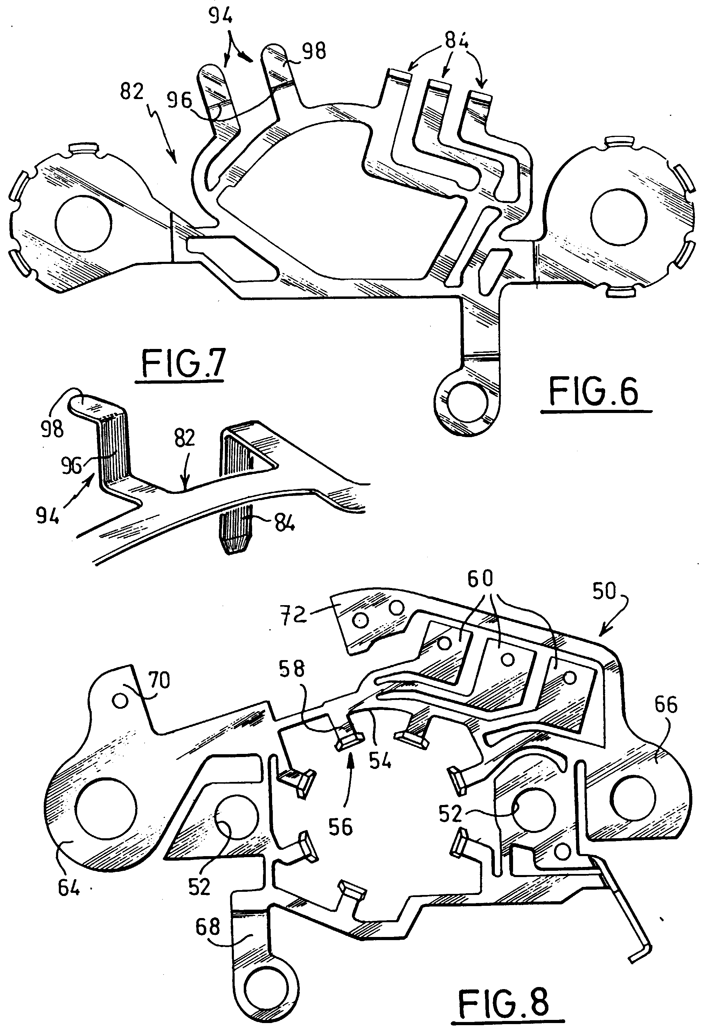

La plaque-support 12 est constituée pour l'essentiel par une plaque en matériau isolant 16 de l'électricité 16 dont la face supérieure sensiblement plane 18 constitue le plan de joint avec la face inférieure 20 du couvercle 14 (voir figure 5).

L'ensemble 10 comporte également un dispositif porte-balais 22 qui est constitué pour l'essentiel par un corps en matériau isolant 24 qui est réalisé venu de matière par moulage avec la plaque-support inférieure 12.

L'ensemble porte-balais 24, d'une conception connue, comporte notamment deux balais ou charbons 26 destinés à coopérer avec des pistes conductrices (non représentées) de l'arbre du rotor de l'alternateur.

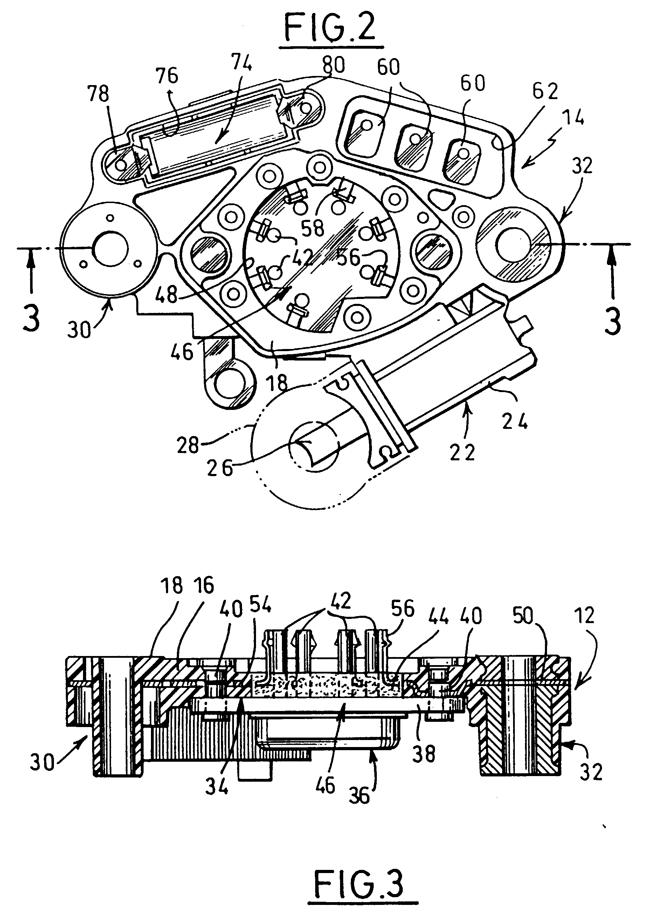

Avant son montage sur l'alternateur, le porte-balais 22 peut comporter un capuchon amovible 28 (illustré en silhouette sur la figure 2) qui protège les charbons 26.

Le corps 16 en forme de plaque de la plaque-support 12 comporte deux prolongements en forme de douilles 30 et 32 servant notamment à la fixation de l'ensemble 10 et au raccordement électrique de ce dernier avec la masse du corps de l'alternateur.

La plaque-support 12 porte également, sur sa face inférieure 34, un circuit intégré désigné par la référence générale 36 dont la platine de support 38 comporte deux plots de fixation 40 qui sont partiellement noyés dans le matériau isolant de la plaque 16.

Le circuit intégré 36 comporte une série de sept broches de raccordement 42 qui s'étendent verticalement vers le haut depuis la face supérieure 44 de la platine 38 tournée vers la face inférieure 34 de la plaque 16 et qui traverse le matériau isolant pour déboucher dans un logement 46 formé en creux dans la face supérieure 18 de la plaque 16.

Le logement 46 présente une paroi périphérique cylindrique 48 et les sept broches de raccordement 42 sont agencées régulièrement en cercle à l'intérieur du logement 46 radialement vers l'intérieur par rapport à la paroi latérale 48.

Comme on peut le voir notamment sur la figure 3, les broches de raccordement 42 font saillie axialement hors du logement 46 au-delà de la face supérieure 18 du corps 16 de la plaque-support 12.

Le raccordement électrique des broches de raccordement 42 au porte-balais 22 et à l'extérieur est assuré au moyen d'un flan métallique de raccordement 50, illustré en détail sur la figure 8, qui est un flan en tôle métallique découpée et pliée.

Le flan 50 est partiellement noyé dans la matière plastique isolante constitutive du corps 16 de la plaque-support 12, lors de l'opération de moulage de cette dernière.

Il comporte notamment des orifices 52 pour le passage des plots 40 du circuit intégré 36 et une ouverture centrale principale 54 qui s'étend autour du logement 46.

Le flan métallique de raccordement électrique 50 comporte une série de sept pattes de raccordement 56 dont chacune s'étend verticalement le long d'une broche de raccordement 42 correspondante (voir figures 2 et 3).

A cet effet, chaque patte de raccordement 56 est reliée au bord de l'ouverture 54 par une patte de liaison 58 qui s'étend dans le plan général du flan de raccordement électrique 50 et qui se prolonge par la patte de raccordement 56 proprement dite qui s'étend verticalement à angle droit par rapport au plan du flan de raccordement 50.

L'extrémité libre de chacune des pattes 56 est prévue pour être soudée à la portion en vis-à-vis de l'extrémité libre d'une broche correspondante de raccordement 42 du circuit intégré 36.

Les pattes de raccordement 56 peuvent être dimensionnées et conformées de manière à être légèrement en appui élastique contre les broches de raccordement correspondantes 42, avant l'opération de soudage, et ceci de façon à assurer un meilleur contact électrique.

Le flan de raccordement électrique 50 comporte également, dans ce mode de réalisation, trois zones coplanaires de contact électrique 60 qui, comme on peut le voir sur la figure 2, ne sont pas recouvertes par la matière isolante constitutive du corps 16 de la plaque-support 12 et qui sont agencées dans une fenêtre 62 formée à cet effet dans la face supérieure 18 de la plaque-support (voir figure 2).

Le flan de raccordement électrique 50 comporte deux rondelles de raccordement 64 et 66 pour permettre le passage des éléments de fixation de l'ensemble 10 à travers les douilles 30 et 32 avec un contact électrique de masse.

Enfin, le flan de raccordement électrique 50 comporte une borne extérieure 68 et deux pattes de raccordement opposées 70 et 72 qui sont coplanaires et non revêtues de matériau isolant.

Les pattes 70 et 72 ont pour but de permettre le raccordement électrique d'un condensateur 74 qui est reçu dans un réceptacle 76 réalisé venu de matière avec le corps 16 de la plaque-support 12 en matériau isolant moulé, qui débouche dans la face supérieure 18 de cette dernière et qui s'étend verticalement vers le bas.

Le condensateur 74, qui est de forme générale parallélépipédique rectangle complémentaire de celle du réceptacle 76 comporte deux pattes de raccordement électrique 78 et 80 qui sont prévues pour venir en contact électrique avec les zones de raccordement 70 et 72 du flan de raccordement électrique 50 lorsque le condensateur est en place dans le réceptacle 76.

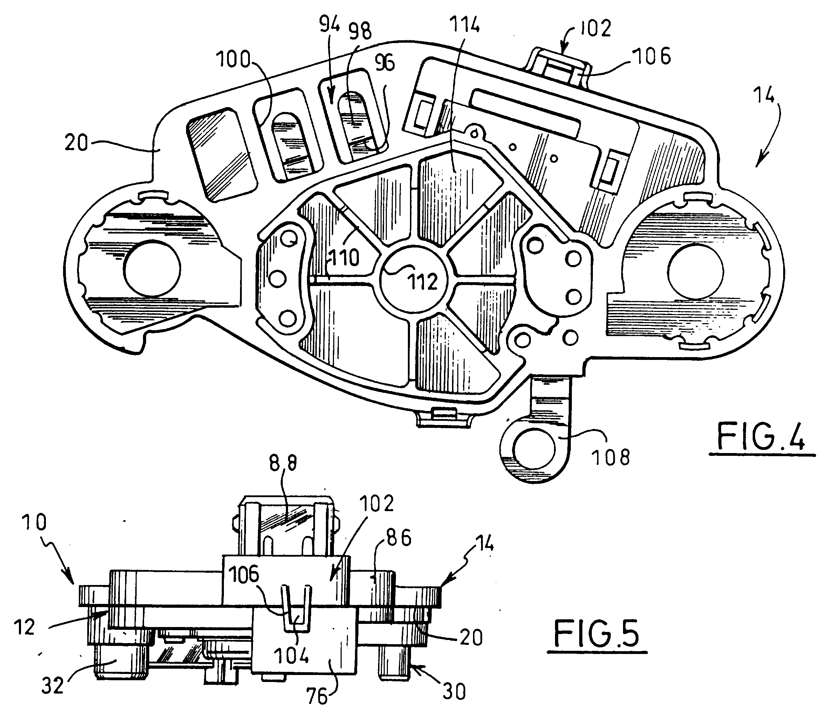

Le couvercle 14, qui est notamment illustré sur la figure 4, est un élément en forme générale de plaque moulée en matériau isolant de l'électricité.

La matière isolante du couvercle 14 est surmoulée sur un flan de branchement électrique 82, qui est illustré en détail sur la figure 6, qui est réalisé en tôle découpée et pliée.

Le flan de branchement électrique 82 comporte trois bornes de branchement 84 qui sont agencées à la périphérie du flan de branchement électrique 82 et qui s'étendent verticalement à angle droit par rapport au plan général du flan de branchement électrique 82 et vers le haut au-delà de la face supérieure 86 du couvercle 14.

Ces pattes de branchement 84 s'étendent à l'intérieur d'un boîtier en matériau isolant 88 réalisé venu de matière par moulage avec le corps en matériau isolant du couvercle 14 pour constituer une prise de branchement 90 de l'ensemble 10.

Le corps en matériau isolant 88 de la prise 90 peut comporter, sur sa paroi périphérique externe, des moyens de guidage 92 et de blocage 94 destinés à coopérer avec une fiche femelle correspondante (non représentée) appartenant à un faisceau de câblage électrique du véhicule automobile.

Dans le mode de réalisation illustré sur les figures, la prise 90 est une prise droite qui s'étend axialement au-delà de la face supérieure 86, c'est-à-dire selon une direction sensiblement parallèle aux broches de raccordement électrique 42 du circuit intégré 36 et parallèle à l'axe de rotation de l'alternateur (non représenté).

Conformément aux enseignements de l'invention, il est possible de réaliser de nombreuses variantes de formes et d'orientations de la prise 90 en changeant simplement le couvercle 14 de l'ensemble 10, la prise 90 pouvant par exemple être coudée à 90°, les bornes de branchement 84 étant également pliées à 90°.

Il est ainsi possible de réaliser une gamme modulaire d'ensembles 10 à partir d'un même module de base constitué par la plaque-support inférieure 12, en changeant seulement le couvercle 14 qui est spécifique à une application particulière.

Le flan de branchement électrique 82 comporte également, dans ce mode de réalisation, deux pattes 94 de liaison électrique dont chacune est constituée par une branche verticale 96 qui s'étend verticalement vers le bas, c'est-à-dire à l'opposé des bornes de branchement électrique 84, et dont chacune se termine par une extrémité 98 repliée à 90° qui s'étend ainsi parallèlement au plan général du flan de branchement électrique 82.

Comme on peut le voir notamment sur la figure 4, les pattes 94 de liaison électrique s'étendent chacune dans une fenêtre 100 formée dans le corps en matériau isolant du couvercle 14.

Les pattes 94 de liaison électrique sont espacées l'une de l'autre de manière à pouvoir venir en vis-à-vis des zones 60 de raccordement électrique du flan de raccordement électrique 50 et en contact électrique avec celles-ci lorsque le couvercle est en position fixée sur la plaque-support 12.

Le maintien en position du couvercle 14 sur la plaque-support 12 est par exemple assuré par un dispositif d'accrochage 102 réalisé venu de matière par moulage respectivement avec le corps 16 de la plaque-support 12, sous la forme d'un ergot 104 et, respectivement, avec le corps du couvercle 14 sous la forme d'une patte d'accrochage 106 en U (voir figure 5).

Selon les différents modèles d'ensembles 10, il est possible de prévoir une, deux ou trois pattes 94 qui viennent en contact avec les zones 60 du circuit de raccordement électrique constitué par le flan métallique 50.

Le circuit de branchement électrique constitué par le flan métallique 82 comporte également une borne extérieure coudée 108 qui vient coopérer électriquement avec la borne extérieure plate 68 du flan de raccordement électrique 50.

Outre sa grande compacité et son aspect modulaire, la conception selon l'invention de l'ensemble 10 permet également d'utiliser un circuit intégré comportant un grand nombre de broches de raccordement électrique 42 qui sont agencées de manière avantageuse en cercle et de manière régulière pour faciliter leur raccordement électrique avec les pattes 56 et leur soudage.

Après assemblage du couvercle 14 sur la plaque-support 12, il est possible de souder électriquement par résistance les pattes de liaison 94 sur les zones 60 ainsi que les bornes extérieures 68 et 108.

Les fenêtres 100 peuvent, après ces opérations de soudage par résistance, être recouvertes par un mastic en matériau isolant de l'électricité.

La conception en deux parties de l'ensemble 10 permet également d'assurer un très bon isolement électrique entre les différentes broches de raccordement 42 du circuit intégré.

A cet effet, et comme on peut le voir sur la figure 4, la face inférieure 20 du couvercle 14 comporte une série de sept cloisons d'isolation électrique 110 qui sont réalisées venues de matière par moulage avec le corps en matériau isolant du couvercle 14.

Les cloisons 110 font saillie verticalement depuis la face inférieure 20 du couvercle 14 pour s'étendre entre les broches de raccordement 42 et partiellement à l'intérieur du logement 46.

Les cloisons isolantes 110 sont agencées radialement autour d'un noyau tubulaire 112 qui accroît la rigidité de l'ensemble et délimite avec les cloisons 110 des logements 114 dont la paroi latérale continue de chacun est réalisée en matériau isolant et dont chacun reçoit une broche de raccordement électrique 42 et une patte de raccordement électrique associée 56.

De plus, ces cloisons isolantes 110 permettent l'augmentation des lignes de fuite afin d'assurer l'étanchéité relative entre les différentes broches de raccordement 42 du circuit intégré 36.

## Revendications

1. Ensemble (10) d'alimentation et de commande pour un alternateur de véhicule automobile, du type comportant une plaque-support en matériau isolant (12) destinée à être fixée à une partie fixe de l'alternateur, et à un porte-balais (24), et du type dans lequel la plaque-support (12) porte, sur une première face (34), un circuit intégré (36) de régulation de la tension fournie par l'alternateur, dont des broches de raccordement électrique (42) s'étendent à travers le matériau (16) de la plaque-support (12) pour déboucher dans un logement (46) formé dans la seconde face (18) de la plaque-support (12), et du type comportant un circuit de raccordement électrique (50) qui comporte des pattes (56) de raccordement en contact avec les broches de raccordement (42) du circuit intégré (36) et qui est relié à au moins deux bornes de branchement (84) entourées par un boîtier en matériau isolant (88) pour constituer une prise de branchement (90) de l'ensemble (10), caractérisé en ce qu'il comporte un couvercle en matériau isolant (14) en forme générale de plaque destiné à recouvrir la seconde face (18) de la plaque-support (12) et qui porte la prise de branchement (90) dont le boîtier isolant (88) est réalisé venu de matière par moulage avec le couvercle (14) et dont les bornes de branchement (88) appartiennent à un circuit de branchement (82) qui est relié au circuit de raccordement (50) de la plaque-support (12).

2. Ensemble selon la revendication 1, caractérisé en ce que le couvercle (14) comporte un circuit de branchement réalisé sous la forme d'un flan métallique découpé de branchement (82), partiellement noyé dans le matériau isolant du couvercle (14), dont au moins deux pattes (84) non-recouvertes de matériau isolant font saillie hors du plan général du flan métallique de branchement (82) au-delà d'une face supérieure (86) du couvercle (14) pour constituer les bornes de branchement.

3. Ensemble selon la revendication 2, caractérisé en ce que des pattes (94) du flan métallique de branchement (82), non recouvertes de matériau isolant, font saillie hors du plan général du flan métallique de branchement (82), au-delà de la face inférieure (20) du couvercle, agencée en regard de la seconde face (18) de la plaque-support (12), pour constituer des pattes de liaison électrique (94), qui sont en contact électrique avec des zones (60) de contact électrique du circuit de raccordement (50) de la plaque-support (12).

4. Ensemble selon l'une des revendications 2 ou 3, caractérisé en ce que les pattes de liaison électrique (94) comportent des extrémités repliées (96) à angle droit qui s'étendent dans un plan parallèle au plan général du couvercle (14).

5. Ensemble selon la revendication 4, caractérisé en ce que les extrémités repliées à angle droit (96) des pattes de liaison électrique (94) s'étendent dans des fenêtres (100) du couvercle qui débouchent dans la face supérieure (86) du couvercle (14).

6. Ensemble selon l'une quelconque des revendications précédentes, caractérisé en ce que le circuit de raccordement (50) de la plaque-support (12) est réalisé sous la forme d'un flan métallique découpé de raccordement (50), partiellement noyé dans le matériau isolant (16) de la plaque-support (14), dont des pattes (56) non recouvertes de matériau isolant font saillie hors du plan général du flan métallique de raccordement (50) et à l'intérieur du logement (46) pour être en contact électrique avec les broches de raccordement (42) du circuit intégré (36).

7. Ensemble selon la revendication 6, prise en combinaison avec l'une quelconque des revendications 3 ou 5, caractérisé en ce que le flan métallique de raccordement (50) comporte des zones planes (60) non recouvertes de matériau isolant qui constituent les zones (60) de contact du circuit de raccordement (50) pour sa liaison électrique avec le circuit de branchement (82).

8. Ensemble selon l'une des revendications 6 ou 7, caractérisé en ce que les pattes de raccordement s'étendent sensiblement à angle droit par rapport au plan général du flan métallique de raccordement (50) et chacune le long d'une broche de raccordement correspondante (42) à laquelle elle peut être soudée.

9. Ensemble selon l'une quelconque des revendications 6 à 8, caractérisé en ce que le flan métallique de raccordement (50) comporte une ouverture centrale (54) qui s'étend autour du logement (46) formé dans la seconde face (18) de la plaque-support (12), et en ce que les pattes de raccordement (56) s'étendent vers l'intérieur à partir du bord périphérique (54) de cette ouverture en direction des broches (42) de raccordement du circuit intégré (36).

10. Ensemble selon l'une quelconque des revendications précédentes, caractérisé en ce que la face inférieure (20) du couvercle (14) comporte une série de cloisons (110) en matériau isolant, réalisées venues de matière par moulage, qui s'étendent en saillie à l'intérieur du logement (46) formé dans la seconde face (18) de la plaque-support (12), entre les broches (42) de raccordement du circuit intégré (36).

11. Ensemble selon l'une quelconque des revendications précédentes, caractérisé en ce que la plaque-support (12) comporte un réceptacle (76), réalisé venu de matière par moulage, destiné à recevoir un condensateur (74).

12. Ensemble selon la revendication 11 prise en combinaison avec la revendication 6, caractérisé en ce que le condensateur (74) comporte deux pattes (78, 80) de raccordement destinées à venir en contact avec deux zones (70, 72), non recouvertes de matériau isolant, du flan métallique de raccordement (50) qui sont agencées le long du bord ouvert du réceptacle (76) qui est situé sensiblement dans le plan du flan métallique de raccordement (50).

13. Ensemble selon l'une quelconque des revendications précédentes, caractérisé en ce que le corps en matériau isolant (24) du porte-balais (22) est réalisé en une seule pièce moulée avec la plaque-support (12).

14. Ensemble selon l'une quelconque des revendications précédentes, caractérisé en ce que la plaque-support (12) et le couvercle (14) en forme de plaque s'étendent dans un plan général sensiblement perpendiculaire à l'axe de rotation du rotor de l'alternateur.

## Patentansprüche

1. Speise- und Steuereinheit (10) für einen Wechselstromgenerator eines Kraftfahrzeugs, in der Ausführung mit einer Tragplatte aus nichtleitendem Material (12), die an einem ortsfesten Teil des Wechselstromgenerators zu befestigen ist, und einem Bürstenhalter (24), wobei die Tragplatte (12) auf einer ersten Fläche (34) eine integrierte Schaltung (36) zur Regelung der durch den Wechselstromgenerator gelieferten Spannung trägt, deren elektrische Verbindungsstifte (42) durch das Material (16) der Tragplatte (12) hindurchgehen, um in eine Aufnahme (46) zu münden, die in der zweiten Fläche (18) der Tragplatte (12) ausgebildet ist, und in der Ausführung mit einer elektrischen Verbindungsschaltung (50) , die Verbindungsansätze (56) enthält, die mit den Verbindungsstiften (42) der integrierten Schaltung (36) in Kontakt stehen, und die mit mindestens zwei Anschlußklemmen (84) verbunden ist, die von einem Gehäuse aus nichtleitendem Material (88) umgeben sind, um eine Anschlußbuchse (90) der Einheit (10) zu bilden, **dadurch gekennzeichnet,** daß sie einen allgemein plattenförmigen Deckel aus nichtleitende Material (14) umfaßt, der die zweite Fläche (18) der Tragplatte (12) abdecken soll und der die Anschlußbuchse (90) trägt, deren nichtleitendes Gehäuse (88) einstückig am Deckel (14) angeformt ist und deren Anschlußklemmen (88) zu einer Anschlußschaltung (82) gehören, die mit der Verbindungsschaltung (50) der Trägplatte (12) verbunden ist.

2. Einheit nach Anspruch 1 , **dadurch gekennzeichnet,** daß der Deckel (14) eine Anschlußschaltung umfaßt, die in Form einer teilweise in das nichtleitende Material des Deckels (14) eingelassenen, gestanzten Anschlußscheibe (82) aus Metall ausgeführt ist, von der mindestens zwei nicht mit nichtleitendem Material bedeckte Ansätze (84) aus der Gesamtebene der Metallanschlußscheibe (82) über eine Oberseite (86) des Deckels (14) hinaus vorstehen, um die Anschlußklemmen zu bilden.

3. Einheit nach Anspruch 2 , **dadurch gekennzeichnet,** daß nicht mit nichtleitendem Material bedeckte Ansätze (94) der Metallanschlußscheibe (82) aus der Gesamtebene der Metallanschlußscheibe (82) über die Unterseite (20) des Deckels hinaus vorstehen, welche gegenüber der zweiten Fläche (18) der Tragplatte (12) angeordnet ist, um elektrische Verbindungsansätze (94) zu bilden, die in elektrischem Kontakt mit Kontaktstellen (60) der Verbindungsschaltung (50) der Tragplatte (12) stehen.

4. Einheit nach Anspruch 2 , **dadurch gekennzeichnet,** daß die elektrischen Verbindungsansätze (94) rechtwinklig umgebogene Enden (96) umfassen, die sich in einer zur Gesamtebene des Deckels (14) parallelen Ebene erstrecken.

5. Einheit nach Anspruch 4 , **dadurch gekennzeichnet,** daß sich die rechtwinklig umgebogenen Enden (96) der elektrischen Verbindungsansätze (94) in Fenstern (100) des Deckels erstrekken, die in die Oberseite (86) des Deckels (14) münden.

6. Einheit nach einem der vorangehenden Ansprüche, **dadurch gekennzeichnet,** daß die Verbindungsschaltung (50) der Tragplatte (12) in Form einer teilweise in das nichtleitende Material (16) der Tragplatte (12) eingelassenen, gestanzten Verbindungsscheibe (50) aus Metall ausgeführt ist, deren nicht mit nichtleitendem Material bedeckte Ansätze (56), aus der Gesamtebene der Metallverbindungsscheibe (50) und in das Innere der Aufnahme (46) vorstehen, um mit den Verbindungsstiften (42) der integrierten Schaltung (36) in elektrischen Kontakt zu treten.

7. Einheit nach Anspruch 6 in Kombination mit einem der Ansprüche 3 oder 5, **dadurch gekennzeichnet,** daß die Metallverbindungsscheibe (50) nicht mit nichtleitendem Material bedeckte ebene Stellen (60) umfaßt, welche die Kontaktstellen (60) der Verbindungsschaltung (50) für ihre elektrische Verbindung mit der Anschlußschaltung (82) bilden.

8. Einheit nach einem der Ansprüche 6 oder 7 , **dadurch gekennzeichnet,** daß sich die Verbindungsansätze in etwa rechtwinklig im Verhältnis zur Gesamtebene der Metallverbindungsscheibe (50)und jeweils entlang einem entsprechenden Verbindungsstift (42) erstrecken, an dem sie angeschweißt werden können.

9. Einheit nach einem der Ansprüche 6 bis 8 , **dadurch gekennzeichnet,** daß die Metallverbindungsscheibe (50) eine mittige Öffnung (54) enthält, die sich um die in der zweiten Fläche (18) der Tragplatte (12) ausgebildete Aufnahme (46) herum erstreckt, und daß sich die Verbindungsansätze (56) von der Umfangskante (54) dieser Öffnung aus nach innen in Richtung der Verbindungsstifte (42) der integrierten Schaltung (36) erstrecken.

10. Einheit nach einem der vorangehenden Anspruche, **dadurch gekennzeichnet,** daß die Unterseite (20) des Deckels (14) eine Reihe von einstückig angeformten Zwischenwänden (110) aus nichtleitendem Material umfaßt, die sich in das Innere der in der zweiten Fläche (18) der Tragplatte (12) ausgebildeten Aufnahme (46) vorspringend zwischen den Verbindungsstiften (42) der integrierten Schaltung (36) erstrecken.

11. Einheit nach einem der vorangehenden Ansprüche, **dadurch gekennzeichnet,** daß die Tragplatte (12) ein einstückig angeformtes Gehäuse (76) für die Aufnahme eines Kondensators (74) umfaßt.

12. Einheit nach Anspruch 11 in Kombination mit Anspruch 6, **dadurch gekennzeichnet,** daß der Kondensator (74) zwei Verbindungsansätze (78, 80) umfaßt, die mit zwei nicht mit nichtleitendem Material bedeckten Stellen (70, 72) der Metallverbindungsscheibe (50) in Kontakt kommen, die entlang der offenen Kante des Gehäuses (76) angeordnet sind, die sich in etwa in der Ebene der Metallverbindungsscheibe (50) befindet.

13. Einheit nach einem der vorangehenden Ansprüche, **dadurch gekennzeichnet,** daß der aus nichtleitendem Material bestehende Körper (24) des Bürstenhalters (22) einstückig mit der Tragplatte (12) ausgeführt ist.

14. Einheit nach einem der vorangehenden Ansprüche, **dadurch gekennzeichnet,** daß sich die Tragplatte (12) und der plattenförmige Dekkel (14) in einer Gesamtebene erstrecken, die in etwa senkrecht zur Drehachse des Läufers des Wechselstromgenerators verläuft.

## Claims

1. A power supply and control unit (10) for a motor vehicle alternator, of the type comprising a support plate (12) of insulating material, adapted to be fixed to a fixed part of the alternator, together with a brush carrier (24), and of the type in which the support plate (12) carries, on a first face (34), an integrated circuit (36) for regulating the voltage supplied by the alternator, having electrical connecting pins (42) which extend through the material (16) of the support plate (12), to emerge in a housing (46) formed in the second face (18) of the support plate (12), and of the type that includes an electrical connection circuit (50) which has connecting lugs (56) in contact with the connecting pins (42) of the integrated circuit (36), and which is connected to at least two branching terminals (84) surrounded by a housing (88) of insulating material so as to constitute a branching socket (90) of the unit (10), characterised in that it includes a cover member (14) of insulating material having the general form of a plate, which is adapted to overlie the second face (18) of the support plate (12), and which carries the branching socket (90), the insulating housing (88) of which is made integrally by moulding with the cover member (14), with its branching terminals (84) being part of a branching circuit (82) which is connected to the connecting circuit (50) of the support plate (12).

2. A unit according to Claim 1, characterised in that the cover member (14) includes a branching circuit in the form of a press-formed flat metal branched member (82) which is partly encapsulated in the insulating material of the cover member (14) and which has at least two lugs (84) not covered with insulating material, which project out of the general plane of the metal branched member (82) and beyond an upper face (86) of the cover member (14), so as to constitute the branching terminals.

3. A unit according to Claim 2, characterised in that lugs (94) of the flat metal branched member (82), not covered with insulating material, project out of the general plane of the flat metal branched member (82) and beyond the lower face (20) of the cover member which is disposed in facing relationship with the second face (18) of the support plate (12), so as to constitute electrical connecting lugs (94) which are in electrical contact with electrical contact zones (60) of the connecting circuit (50) of the support plate (12).

4. A unit according to Claim 2 or Claim 3, characterised in that the electrical connecting lugs (94) have end portions (96) bent back at right angles and extending in a plane parallel to the general plane of the cover member (14).

5. A unit according to Claim 4, characterised in that the end portions (96), bent back at right angles, of the electrical connecting lugs (94) extend into windows (100) of the cover member, which are open in the upper face (86) of the cover member (14).

6. A unit according to any one of the preceding Claims, characterised in that the connecting circuit (50) of the support plate (12) is made in the form of a press-formed flat metal connecting member (50) which is partially encapsulated in the insulating material (16) of the support plate (12), and which has lugs (56) free of covering insulating material and projecting out of the general plane of the flat metal connecting member (50) and into the housing (46), so as to be in electrical contact with the connecting pins (42) of the integrated circuit (36).

7. A unit according to Claim 6 in combination with either Claim 3 or Claim 5, characterised in that the flat metal connecting member (50) includes flat zones (60) which are not covered with insulating material, and which constitute the contact zones (60) of the connecting circuit (50) for its electrical connection with the branching circuit (82).

8. A unit according to Claim 6 or Claim 7, characterised in that the connecting lugs extend substantially at right angles with respect to the general plane of the flat metal connecting member (50), each one along a corresponding connecting pin (42), to which it can be soldered.

9. A unit according to any one of Claims 6 to 8, characterised in that the flat metal connecting member (50) has a central aperture (54) which extends around the housing (46) formed in the second face (18) of the support plate (12), and in that the connecting lugs (56) extend inwards from the peripheral edge (54) of the said aperture, towards the connecting pins (42) of the integrated circuit (36).

10. A unit according to any one of the preceding Claims, characterised in that the lower face (20) of the cover member (14) includes a set of dividing wall portions (110) of insulating material, formed integrally by moulding and projecting into the housing (46) formed in the second face (18) of the support plate (12), between the connecting pins (42) of the integrated circuit (36).

11. A unit according to any one of the preceding Claims, characterised in that the support plate (12) includes a receptacle (76) formed integrally by moulding and adapted to receive a capacitor (74).

12. A unit according to Claim 11 in combination with Claim 6, characterised in that the capacitor (74) has two connecting lugs (78, 80) which are adapted to make contact with two zones (70, 72), not covered with insulating material, of the flat metal connecting member (50), these two zones being disposed along the open edge of the receptacle (76), which is situated substantially in the plane of the flat metal connecting member (50).

13. A unit according to any one of the preceding Claims, characterised in that the body of insulating material (24) of the brush carrier (22) is made in one piece moulded with the support plate (12).

14. A unit according to any one of the preceding Claims, characterised in that the support plate (12) and the cover member (14) in the form of a plate lie in a general plane which is substantially at right angles to the axis of rotation of the rotor of the alternator.
